# EUROPEAN PATENT APPLICATION

(11) **EP 2 017 912 A1**
(43) Date of publication of application: **21.01.2009**
(21) Application number: 07737016.1
(22) Date of filing: 03.04.2007
(51) Int. Cl.: H01M 8/02, H01M 8/10

(54) **SEPARATOR FOR FUEL CELL AND PROCESS FOR PRODUCING THE SAME**

(30) Priority: 05.04.2006 JP 2006104424
(71) Applicant: NIPPON PILLAR PACKING CO., LTD., Osaka-shi, Osaka 532-0022 (JP)
(72) Inventor: OTAWA, Kazuhiko, Sanda-shi, Hyogo 669-1333 (JP); HASHIMOTO, Akira, Sanda-shi, Hyogo 669-1333 (JP); IKEDA, Nobuhiko, Sanda-shi, Hyogo 669-1333 (JP); HORIKI, Kenichi, Sanda-shi, Hyogo 669-1333 (JP)
(74) Representative: Fleuchaus, Michael A.
(86) International application number: PCT/JP2007/000359
(87) International publication number: WO 2007/125640

(57) **Abstract**

In order to attain excellent electrical conductivity and molding processability, a fuel cell separator to be produced by performing press molding on a preform in which expanded graphite is used as the main raw material is improved so that the preform is produced by a papermaking method, whereby the characteristics of the mechanical strength, the flexibility, and the gas impermeability are improved, and a light and compact configuration that is preferred in the automobile use or the like can be realized. In a fuel cell separator which is to be produced by performing press molding on a preform 14 that is formed into a plate-like shape, with a molding die, therefore, the preform 14 is configured into a sandwich structure where a second sheet 14B in which a phenol resin is applied to graphite is interposed between a pair of first sheets 14A made by impregnating a sheet-like member with a phenol resin, the sheet-like member being obtained by a papermaking process using a raw material in which a fibrous filler is added to expanded graphite.

## Description

### Technical Field

The present invention relates to a fuel cell separator which is produced by performing press molding on a preform that is formed into a plate-like shape, with using a molding die, and also to a method of producing it.

### Background Art

A fuel cell separator has: a role of adequately holding an MEA (Membrane Electrode Assembly) in a fuel cell cell (a unit member in which an MEA is interposed between fuel cell separators) and supplying fuel (hydrogen) and air (oxygen) that are necessary in the electrochemical reaction; that of collecting electrons obtained by the electrochemical reaction for functioning as a fuel cell separator, without a loss; and the like. In order to play these roles, a fuel cell separator is required to have characteristics of 1. mechanical strength, 2. flexibility, 3. electrical conductivity, 4. molding processability, and 5. gas impermeability.

As a material of a fuel cell separator of this kind, conventionally, it is usually that graphite is used as the main raw material from the viewpoint of improving the corrosion resistance, and, in the initial stage of development, a fuel cell separator is produced by cutting sintered carbon. Because of the problem of cost, recently, a technique is employed in which a compound of a thermosetting resin such as a phenol resin or an epoxy resin, and graphite is produced as a molding material, and the compound is compression molded to be formed as a fuel cell separator. Usually, a compound which is used as a molding material is supplied in a powdery state. Therefore, such a compound is once subjected to primary molding for producing a preform at a low temperature at which a resin does not react, and then conveyed to a press molding die which performs secondary molding. As a fuel cell separator in which a preform is once produced by primary molding, and secondary molding is then performed to attain the excellent molding processability, and a method of producing it, known are those disclosed in Patent Reference 1.

On the other hand, as graphite which is to be used as the main raw material of a fuel cell separator, expanded graphite is sometimes used. For example, graphite disclosed in Patent Reference 2 is known. In a fuel cell separator using expanded graphite, expanded graphite is preferable means for effectively using the inherent characteristics of expanded graphite, such as the heat resistance, the corrosion resistance, the electrical property (conductivity), and the thermal conductive characteristics, to exert the predetermined cell performance. Namely, such a separator can be formed so as to have the excellent electrical conductivity. In order to realize a light and compact fuel cell which uses as many as several hundreds to several thousands of separators, and which has a light and compact configuration that is required in the automobile use or the like, it is necessary to reduce the thickness of each separator as far as possible without impairing the required functions.

When a conventional fuel cell separator in which expanded graphite is used as the main raw material is made thin, however, it easily cracks and allows gasses to permeate readily therethrough. Therefore, such a separator has drawbacks in the above-mentioned mechanical strength and gas impermeability.
Patent Reference 1: Japanese Patent Application Laying-Open No. 2004-216756
Patent Reference 2: Japanese Patent Application Laying-Open No. 2000-231926

### Disclosure of the Invention

### Problems to be Solved by the Invention

Therefore, it is an object of the invention to, in order to attain excellent electrical conductivity and molding processability, improve a fuel cell separator that is to be produced by performing press molding on a preform in which expanded graphite is used as the main raw material, so as to produce the preform by a papermaking method, whereby the characteristics of the mechanical strength, the flexibility, and the gas impermeability are improved, and a light and compact configuration that is preferred in the automobile use or the like can be realized.

### Means for Solving the Problems

The invention set forth in claim 1 is a fuel cell separator which is to be produced by performing press molding on a preform 14 that is formed into a plate-like shape, with a molding die, wherein the preform 14 is configured into a sandwich structure where a second sheet 14B in which a thermosetting resin is applied to graphite is interposed between a pair of first sheets 14A obtained by a papermaking process using a raw material in which a fibrous filler is added to expanded graphite.

The invention set forth in claim 2 is characterized in that, in the fuel cell separator according to claim 1, the first sheets 14A have a thermosetting resin which is impregnated after the papermaking process.

The invention set forth in claim 3 is characterized in that, in the fuel cell separator according to claim 2, the thermosetting resin used in the first sheets 14A is a phenol resin.

The invention set forth in claim 4 is characterized in that, in the fuel cell separator according to claim 3, a degree of impregnation of the phenol resin is set to a range of 5 to 30%.

The invention set forth in claim 5 is characterized in that, in the fuel cell separator according to any one of claims 2 to 4, a material ratio of the expanded graphite used in the first sheets is set to 60 to 90%.

The invention set forth in claim 6 is characterized in that, in the fuel cell separator according to claim 3 or 4, the phenol resin contains graphite.

The invention set forth in claim 7 is characterized in that, in the fuel cell separator according to claim 3 or 4, the separator has graphite which is applied after impregnation of the phenol resin.

The invention set forth in claim 8 is characterized in that, in the fuel cell separator according to any one of claims 1 to 4, the fibrous filler has carbon fibers or acrylic fibers.

The invention set forth in claim 9 is characterized in that, in the fuel cell separator according to any one of claims 1 to 4, the thermosetting resin used in the second sheet 14B is a phenol resin.

The invention set forth in claim 10 is a method of producing a fuel cell separator, having a secondary molding step of performing press molding on a preform 14 that is formed into a plate-like shape, with using a molding die 15, wherein the preform 14 is produced by a primary step S1 having: a papermaking step a of performing a papermaking process using a raw material in which a fibrous filler is added to expanded graphite; and a stacking step c of stacking a pair of first sheets 14A obtained in the papermaking step a while interposing a second sheet 14B in which a thermosetting resin is applied to graphite, between the pair.

The invention set forth in claim 11 is characterized in that, in the method producing a fuel cell separator according to claim 10, the primary step S1 has a post-impregnating step b of impregnating a sheet-like member which is paper-made in the papermaking step a, with a phenol resin, thereby producing the first sheets 14A.

The invention set forth in claim 12 is characterized in that, in the method producing a fuel cell separator according to claim 10 or 11, a phenol resin is used as the thermosetting resin for producing the second sheet 14B.

### Effects of the Invention

According to the invention of claim 1, although described in detail in the paragraph of embodiments, the preform has the three-layer sandwich structure where the second sheet in which the graphite and the thermosetting resin are used as the main raw materials is interposed between the two first sheets obtained by a papermaking process, i.e., the configuration where the second sheet having an excellent moldability is interposed between the pair of first sheets which have excellent mechanical and electrical characteristics, which are thin, in which characteristics such as the specific resistance are less dispersed, which can be easily mass-produced, and which is advantageous in production cost. As a result, in order to attain excellent electrical conductivity and molding processability, the fuel cell separator to be produced by performing press molding on a preform in which expanded graphite is used as the main raw material is improved so that the preform has the sandwich structure where a paper-made sheet produced by a papermaking process is positioned in the surface, and therefore it is possible to provide a fuel cell separator in which the characteristics of the mechanical strength, the flexibility, and the gas impermeability are improved, and a light and compact configuration that is preferred in the automobile use or the like can be realized.

According to the invention of claim 2, the first sheets produced by the papermaking process in which expanded graphite is used as the main raw material are later impregnated with the thermosetting resin. In addition to usual functions and effects due to addition of a thermosetting resin, consequently, there is an advantage that the thermosetting resin enters into gaps of the paper-made sheet-like member to fill the gaps, and the gas permeability and the bulk density are advantageously affected, whereby the performance can be further improved. In this case, when, as in claim 3, the thermosetting resin is a phenol resin which is synthesized by condensation polymerization of phenols and aldehydes, further preferable functions and effects that the insulating property, the water resistance, the chemical resistance, and the like are excellent are added.

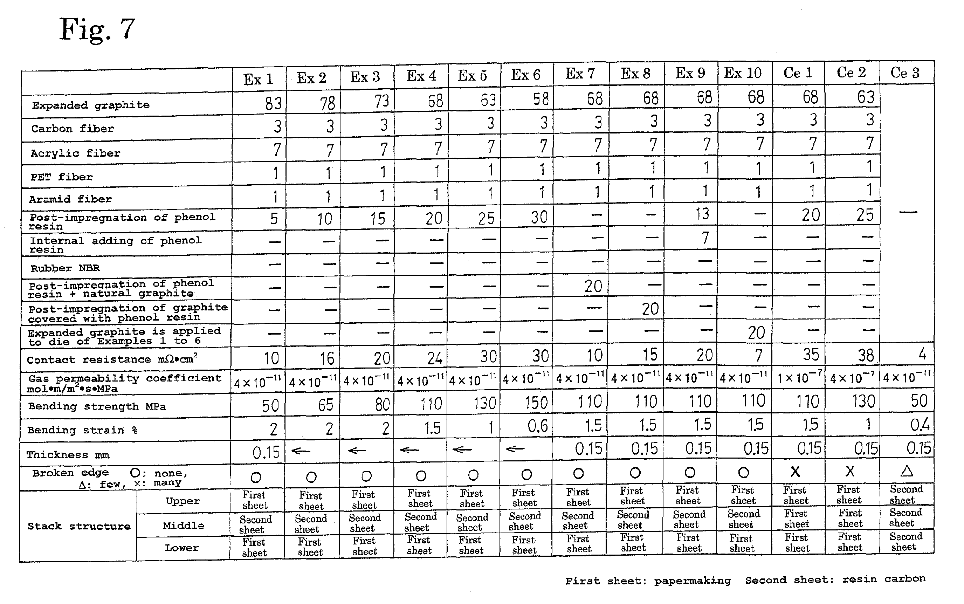

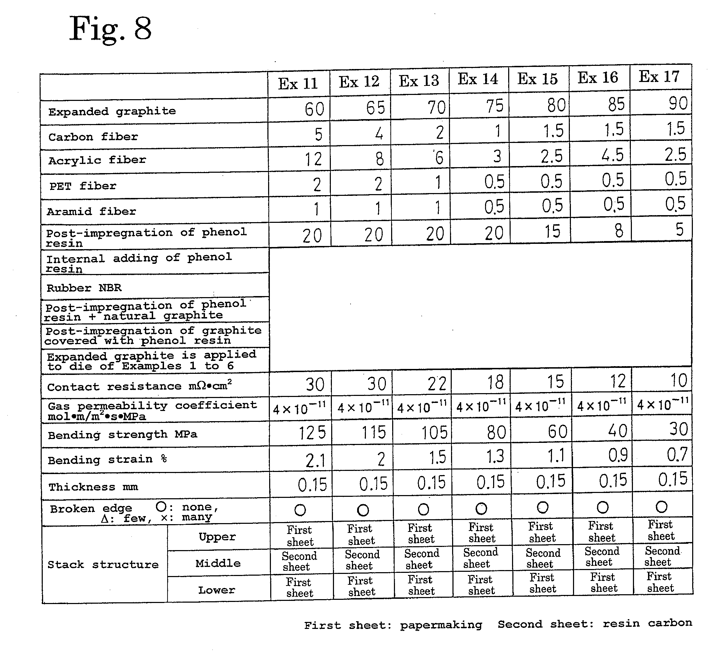

When, as in claim 4, the degree of impregnation of the phenol resin is set to a range of 5 to 30%, or when, as in claim 5, the material ratio of the expanded graphite is set to 60 to 90%, the performance target values that the contact resistance is 30 m□•cm² or less, the bending strength is 25 MPa or more, the bending strain is 0.6 to 2.1%, and the gas permeability coefficient is 1 □ 10⁻⁸ mol•m/m²•s•MPa or less can be satisfied, and hence it is advantageous (see Figs. 7 and 8). In a configuration such as that, as in claim 6, post impregnation of the phenol resin containing graphite is performed, or that, as in claim 7, graphite is applied after impregnation of the phenol resin, it is possible to provide a fuel cell separator in which the above-mentioned characteristic values are made to further high-level values (see Fig. 7).

As in claim 8, the fibrous filler can have carbon fibers or acrylic fibers which are effective in improving the mechanical strength. As in claim 9, the thermosetting resin used in the second sheet is a phenol resin, so that a fuel cell separator having a sandwich structure where both an improvement of the gas permeability coefficient and an excellent moldability can be more efficiently attained can be provided.

The invention of claim 10 is realized by configuring the invention of claim 1 as a method, the invention of claim 11 is realized by configuring the invention of claim 3 as a method, and the invention of claim 12 is realized by configuring the invention of claim 9 as a method. The inventions can provide a method producing a fuel cell separator which can exert functions and effects equivalent to those of the corresponding claim.

### Brief Description of the Drawings

[Fig. 1] Fig. 1 is an exploded perspective view showing a stack structure of a solid polymer electrolyte fuel cell.
[Fig. 2] Fig. 2 is a front view showing a separator of the solid polymer electrolyte fuel cell.
[Fig. 3] Fig. 3 is an enlarged sectional view showing main portions of the configuration of a unit cell.
[Fig. 4] Fig. 4 is an enlarged sectional view showing main portions of the configuration of a cell having another structure.
[Fig. 5] Fig. 5 is a principle view showing a step of papermaking a first sheet.
[Fig. 6] Fig. 6 is a principle view showing a method of producing a separator.
[Fig. 7] Fig. 7 is a table showing various data of separators of Examples 1 to 10 and Comparative examples 1 to 3.
[Fig. 8] Fig. 8 is a table showing various data of separators of Examples 11 to 17.

### Description of Reference Numerals

- 4: fuel cell separator
- 14: preform
- 14A: first sheet (paper-made sheet)
- 14B: second sheet (resin carbon)
- 15: molding die
- a: papermaking step
- b: post-impregnating step
- c: stacking step
- S1: primary step

### Best Mode for Carrying Out the Invention

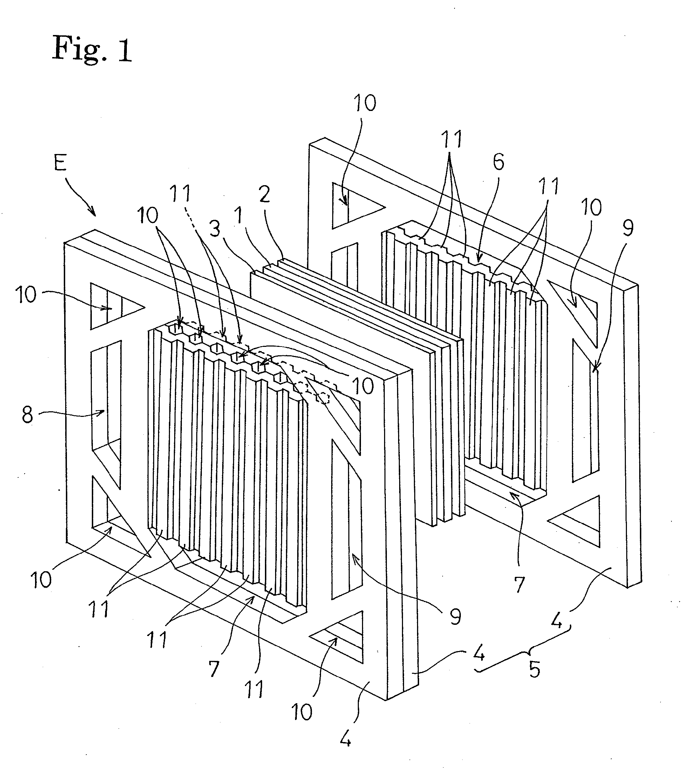

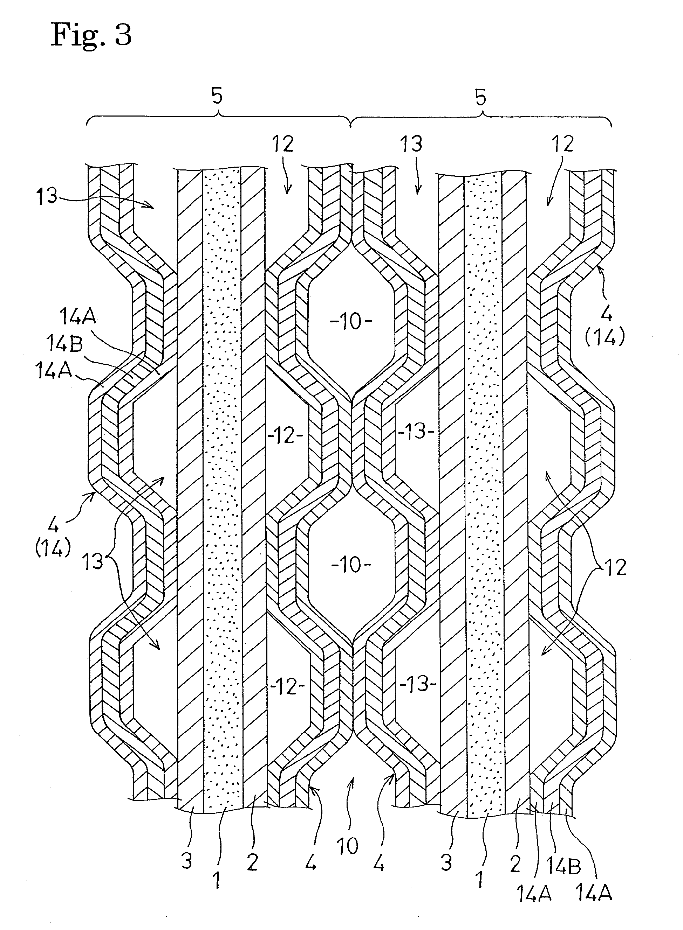

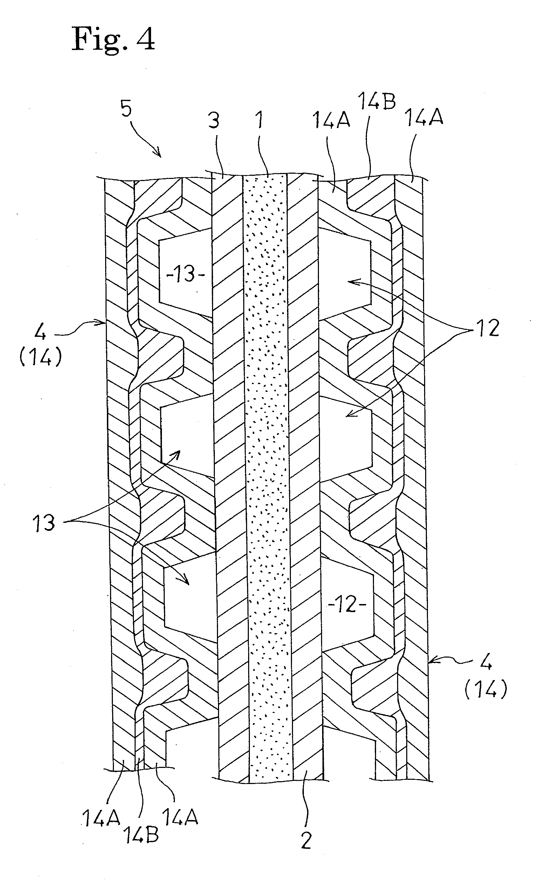

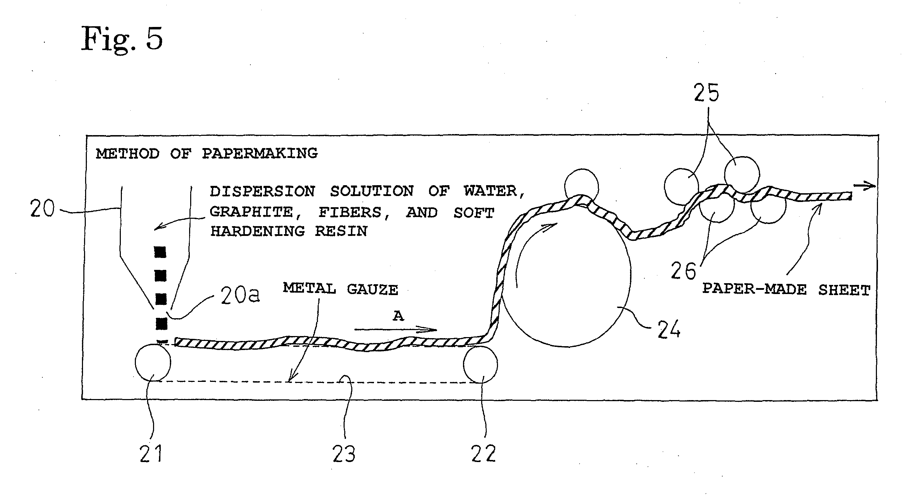

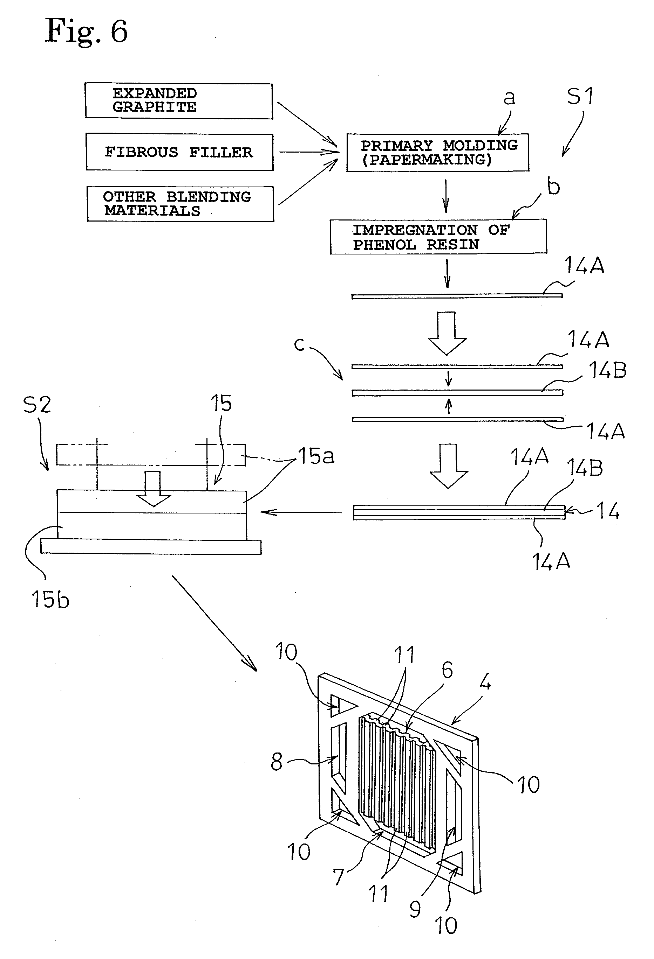

Hereinafter, embodiments of the fuel cell separator and method of producing it according to the invention will be described with reference to the drawings. Figs. 1 to 3 are an exploded perspective views of a stack structure, an external front view of the separator, and an enlarged sectional view showing main portions of a cell structure, Fig. 4 is an enlarged view showing main portions of a unit cell having another structure, Fig. 5 is a diagram showing the principle of papermaking, Fig. 6 is a process view showing the principle of production of the separator, and Figs. 7 and 8 are tables showing data of Examples 1 to 17 and Comparative examples 1 to 3. Hereinafter, "fuel cell separator" is abbreviated simply as "separator".

### [Embodiment 1]

First, the configuration and operation of a solid polymer electrolyte fuel cell comprising the separator of the invention will be described briefly with reference to Figs. 1 to 3. The solid polymer electrolyte fuel cell E is configured into a stack structure in which plural unit cells 5 each configured by: an electrolyte film 1 which is an ion exchange film formed by, for example, a fluorine resin; an anode 2 and cathode 3 which are formed by carbon cloth woven with carbon fiber threads, carbon paper, or carbon felt, and which sandwich the electrolyte film 1 from the both sides to function as gas diffusion electrodes constituting a sandwich structure; and separators 4, 4 which sandwich the sandwich structure from the both sides are stacked, and current collector plates which are not shown are placed in both ends of the stacked cells.

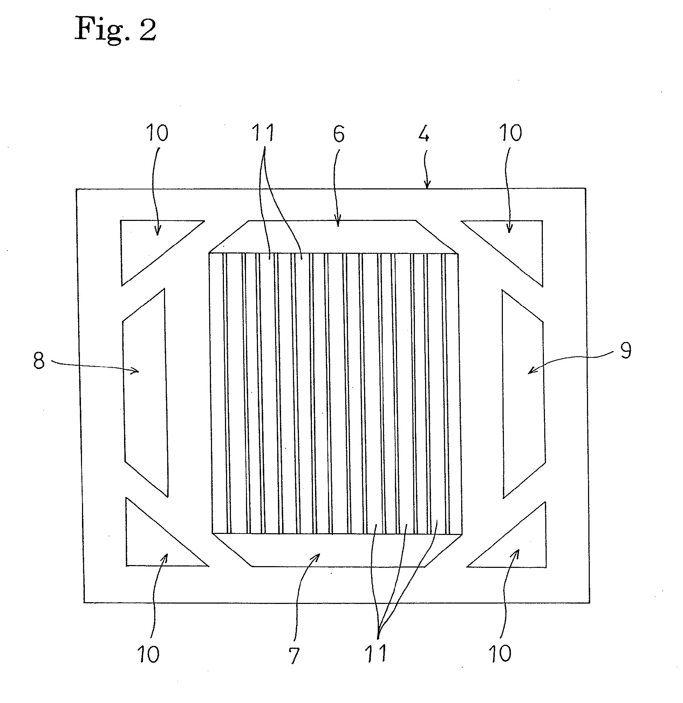

In peripheral portions of the separators 4, as shown in Fig. 2, fuel gas holes 6, 7 containing hydrogen, oxidation gas holes 8, 9 containing oxygen, and cooling water holes 10 are formed. When a plurality of the unit cells 5 are stacked, the holes 6, 7, 8, 9, 10 of the separators 4 pass through the interior of the fuel cell E in the longitudinal direction to form a fuel gas supply manifold, a fuel gas discharge manifold, an oxidation gas supply manifold, an oxidation gas discharge manifold, and a cooling water path. In each of the separators 4, ridges (ribs) 11 are formed in the front and rear sides so that a basic section shape is a rectangular wave shape, and fuel gas flow paths 12 due to butting of the anode 2 and the ridges 11, and oxidation gas flow paths 13 due to butting of the cathode 3 and the ridges 11 are formed. In the case where the side where the electrolyte film 1 exists is set as the inner side, the rear side (inner side) portions of the outward ridges 11 in the separators 4 are adjacent to each other, whereby independent cooling water paths 10 can be formed.

In the thus configured solid polymer electrolyte fuel cell E, the fuel gas which is supplied from a fuel gas supply apparatus disposed outside to the fuel cell E, and which contains hydrogen is supplied to the fuel gas flow paths 12 of the unit cells 5 through the fuel gas supply manifold to exhibit an electrochemical reaction on the sides of the anodes 2 of the unit cells 5, and, after the reaction, the fuel gas is discharged to the outside through the fuel gas flow paths 12 of the unit cells 5 and the fuel gas discharge manifold. At the same time, the oxidation gas (air) which is supplied from an oxidation gas supply apparatus disposed outside to the fuel cell E, and which contains oxygen is supplied to the oxidation gas flow paths 13 of the unit cells 5 through the oxidation gas supply manifold to exhibit an electrochemical reaction on the sides of the cathodes 3 of the unit cells 5, and, after the reaction, the oxidation gas is discharged to the outside through the oxidation gas flow paths 13 of the unit cells 5 and the oxidation gas discharge manifold.

In accordance with the above-mentioned electrochemical reactions, an electrochemical reaction in the whole fuel cell E advances to directly convert the chemical energy of the fuel to the electric energy, thereby exerting a predetermined cell performance. Because of the property of the electrolyte film 1, the fuel cell E is operated in the temperature range of about 80 to 100°C, and hence the operation involves heat generation. During the operation of the fuel cell E, therefore, cooling water is supplied from a cooling water supply apparatus disposed in the outside, to the fuel cell E, and circulated through the cooling water paths, thereby preventing the temperature in the fuel cell E from being raised.

The cell structure may be that shown in Fig. 4. Namely, the cell of Fig. 4 is configured into a structure where, in the surface of each of the separators 4, many dot-like ribs (ribs of a predetermined shape) 11 are arranged vertically and horizontally at regular intervals, vertical and horizontal fuel gas flow paths 12 are formed between the ribs 11 and the surface of the anode 2, and vertical and horizontal oxidation gas flow paths 13 are formed between the ribs 11 and the surface of the cathode 3. In secondary molding S2 , a second sheet 14B which is an intermediate layer, and which has an excellent moldability flows to a thicker portion to be easily changed to a state where the density is uneven. Although the configuration where a first sheet 14A in which the thickness is hardly changed is disposed in the both ends is employed in order to improve mechanical and electrical characteristics, therefore, the separators 4 of the type which is hardly realized in a prior art, and which has concave and convex portions such as the ribs 11 (has a thickness distribution) can be realized.

Next, the manner (production method) of producing the separator 4 will be described. In the production method, the separator 4 is produced by performing press molding a preform that is formed into a plate-like shape, with using a molding die. As shown in Fig. 6, the production method is configured by: a primary molding step S1 of producing a preform 14 having a plate-like shape which is approximate to the shape of the separator; and a secondary molding step S2 of pressurizing the preform 14 by a molding die 15 to form the separator 4 having the final shape. The target characteristics of the separator 4 are as follows: the contact resistance is 30 m□•cm² or less, the bending strength is 25 MPa or more, the bending strain is 0.6 to 2.1%, and the gas permeability coefficient is 1 □ 10⁻⁸ mol•m/m²•s•MPa or less.

The primary molding step S1 is a step of, as shown in Fig. 6, producing the preform 14 having a sandwich structure where the second sheet 14B in which graphite powder is applied to a thermosetting resin is interposed between a pair of first sheets 14A obtained by a papermaking process using a raw material in which a fibrous filler is added to expanded graphite, and has a papermaking step a, a post-impregnating step b, and a stacking step c.

The papermaking step a is a step of producing the first sheet 14A by a papermaking process using a raw material in which a fibrous filler is added to expanded graphite, and, as shown in Fig. 6, performs a papermaking process using a raw material which has expanded graphite (conductive material) that is a main raw material, and a fibrous filler at a predetermined blending ratio, thereby forming the first sheet 14A for the preform 14. The original meaning of papermaking is "making paper using a material for paper". However, the original meaning of papermaking as used in the specification is "making the first sheet using the material for the first sheet". Next, the papermaking will be described briefly.

Fig. 5 schematically shows the papermaking step a of producing the first sheet 14A. Namely, a dispersion solution of graphite (expanded graphite), a fibrous filler, a soft hardening resin, and water is placed in a hopper 20, and supplied dropwise from a lower-end outlet 20a of the hopper 20 to the upper face of a conveyance start end side of an endless rotary strip-like metal gauze 23 which is wound around rollers 21, 22. During conveyance on the metal gauze 23 in the direction of the arrow A, the dispersion solution undergoes a papermaking process (a skimming process) to form an approximately sheet-like member, and the member is lifted up from the conveyance end of the metal gauze 23 to be conveyed along a lifting drum 24 having a large diameter, and then passed between plural upper and lower finishing rollers 25, 26, thereby forming the first sheet 14A (paper-made sheet).

The post-impregnating step b is a step of impregnating the first sheet 14A which is paper-made in the papermaking step a, with a phenol resin, thereby producing the first sheet 14A in a state where it becomes a component of the preform 14. The stacking step c is a step of interposing and impregnating the second sheet 14B in which a phenol resin (an example of a thermosetting resin) is applied to graphite (graphite powder or the like), between the pair of first sheets 14A produced in the papermaking step a and the post-impregnating step b, thereby producing the preform 14 configured by, as shown in Fig. 6, a three-layer sandwich structure of the upper and lower first sheets 14A, 14A and the intermediate second sheet 14B.

The secondary molding step S2 is a step of pressurizing by a press the preform 14 having the three-layer sandwich structure with using the molding die 15 configured by, for example, an upper die 15a and a lower die 15b, thereby producing the separator 4 having the predetermined final shape. Hereinafter, a specific producing method, its example, and the like will be described.

First, the papermaking step a in the primary molding step S1 is performed in the following manner. A fibrous filler in which 3% of carbon fibers, 7% of acrylic fibers, 1% of PET fibers, and 1% of aramid fibers are blended is defiberized with using a domestic mixer to be adjusted so as to have a predetermined pulp density (for example, 1%). To the adjusted pulp slurry, 83% of expanded graphite of, for example, 40 µm is added, and water is further added to readjust the slurry to the solid content concentration of 0.1%. Thereafter, small amounts of other blending materials [aluminum sulfate, a yield improving agent [Hymolock NR11-LH (trade name)]] are added, and a papermaking process is performed while using the slurry as a raw material for papermaking (see Example 1 of Fig. 7) (see Fig. 5). A sheet-like member which is produced in the papermaking step a is processed by a standard square sheet machine, thereby obtaining the first sheet 14A at a basis weight of 70 g/m² and having a 25 cm square shape.

In the post-impregnating step b in the primary molding step S1, impregnation is performed with using a phenol resin solution to obtain the first sheet 14A for the preform 14. The impregnation amount of the phenol resin in Example 1 is set so that the blending ratio after impregnation is 5%. The first sheet 14A produced by the papermaking process is slightly inferior in moldability, for example, hardly bendable, but has excellent mechanical and electrical characteristics.

Although not illustrated, a second-sheet forming step in the primary molding step S1 is a step of coating graphite powder (preferably, having a particle diameter of about 1 to 200 µm) with a phenol resin to produce the second sheet 14B which is resin carbon. The second sheet 14B which is resin carbon is inferior in mechanical characteristics, but excellent in moldability.

Alternatively, the second sheet 14B may be produced in the following manner. The sheet is configured by a thin plate-like molded member in which a carbon-phenol resin molding compound that is prepared by mixing and reacting phenols, aldehydes, and carbon in the presence of a catalyst is molded. The carbon-phenol resin molding compound is obtained as a material in which carbon is thinly and uniformly covered with the phenol resin, by reacting phenols and aldehydes with carbon in the presence of a catalyst while being mixed with carbon. In this case, even when the amount of carbon is increased, a thin plate-like molded member in which carbon particles are surely bonded and the gaps between carbon particles are filled with the phenol resin can be obtained, and it is possible to easily obtain a fuel cell separator which is excellent in mechanical strength and electrical conductivity, and which has a low gas impermeability.

In the secondary molding step S2, the preform 14 having the three-layer sandwich structure which is produced in the primary molding step S1 is subjected to heat and pressure molding during five minutes at a surface pressure of 20 MPa with using a molding die of 170°C (see Fig. 6), to obtain the separator 4. The characteristics of the separator 4 in this case (Example 1) were as follows: the contact resistance is 10 m□**•**cm²**,** the gas permeability coefficient is 4 □ 10⁻¹¹ mol•m/m²•s•MPa, the bending strength is 50 MPa, the bending strain is 2%, and the thickness is 0.15 mm.

Figs. 7 and 8 show a physical property and characteristic table (Fig. 7) of Examples 1 to 10 of the separator 4 of the invention and Comparative examples 1 to 3, and physical properties and characteristics (Fig. 8) of Examples 11 to 17. In the examples, the data of the first sheets 14A are different, and those of the second sheet 14B are identical with one another. Hereinafter, the test conditions of the characteristics will be described. The contact resistance is tested in the following manner. First, two test pieces are sandwiched between two flat copper plates, and a voltage under a pressure of 1 Mpa is measured as a voltage A. Then, four test pieces are used, and a voltage B is measured in a similar manner as described above. The difference between the voltages A and B is divided by 2, and further divided by the area of the test pieces, thereby obtaining the contact resistance (unit: m□•cm²) .

In a bending test (the bending strength and the bending strain), the bending strength and the bending strain are measured by the three-point bending test. The measurement was conducted while setting the distance between fulcrums to 7.8 mm, the cross-head speed to 10 mm/min., and the width of the test pieces to 15 mm. The gas permeability coefficient was measured in accordance with JIS K7126A method (differential pressure method) with using a gas permeability measuring device (BT-1 manufactured by Toyo Seiki Seisaku-sho, Ltd).

In Fig. 7, Examples 1 to 6 show data in the case where the blending ratio of the phenol resin in the post-impregnating step b was changed in the step of 5% in a range of 5 to 30%, and Example 7 shows data in the case where, in place of the post-impregnation of the phenol resin, the phenol resin and natural graphite were post-impregnated. Example 8 shows data in the case where, in place of the post-impregnation of the phenol resin, graphite covered with a phenol resin was post-impregnated. Example 9 shows data in the case where the post-impregnation of the phenol resin was set to 13%, and the internal adding of the phenol resin (the internal adding means "7% of phenol resin is blended as a raw material of the papermaking step a") was set to 7%.

Example 10 shows data in the case where graphite was applied to the surface of the preform 14, i.e., the surface sides of the first sheets 14A, 14A in the both ends which were post-impregnated with the phenol resin. In Example 10, namely, an applying step of applying graphite to the surface of the first sheet 14A which is impregnated with the phenol resin in the post-impregnating step b was added. In all Examples 1 to 10, the blending ratios (blending amounts) of the carbon fibers, acrylic fibers, PET fibers, and aramid fibers which constitute the fibrous filler are identical.

In Fig. 8, Examples 11 to 17 show data in the case where the blending ratio of the expanded graphite was changed in the step of 5% in a range of 60 to 90%. In Examples 11 to 14, the blending ratio of the phenol resin which is post-impregnated is set to 20% in a similar manner as Example 4. In Examples 15 to 17 where the blending ratio of the expanded graphite is 80% or more, however, this value is impossible, and therefore the blending ratio is determined to a value considering the balance with the fibrous filler.

In Fig. 7, Comparative examples 1 and 2 show data in the case where a separator 4 of the totally paper-made type which is configured by stacking three first sheets 14A according to Examples 4 and 5, and which does not have the second sheet 14B is set. Comparative example 3 shows data in the case where a separator 4 of the whole resin carbon type which is configured by stacking three second sheets 14B, and which does not have the first sheet 14A is set.

As seen from Fig. 7, in Comparative examples 1 and 2 of the totally paper-made type, the characteristics are excellent, but the contact resistance and the gas permeability coefficient depart from the specified values, many edges are broken, and the moldability is poor, with the result that the comparative examples are not acceptable. In Comparative example 3 of the whole resin carbon type, the bending strain is outside the range, and edge breakage is observed, with the result that also the comparative example is not acceptable. In order to obtain a high-strength separator (the first sheet 14A) in which the bending strength is 50 MPa or more, it is requested to set the blending ratio (material ratio) of the expanded graphite to a range of 60 to 80%. When the impregnation ratio of the phenol resin is set to a range of 20 to 30%, a super high-strength separator in which the bending strength is 80 MPa or more can be produced. When the impregnation ratio of the phenol resin is set to a range of 20 to 30% and the blending ratio (material ratio) of the expanded graphite is set to a range of 60 to 70%, there is an advantage that an ultra high-strength fuel cell separator in which the bending strength is 105 MPa or more can be realized.

As described above, Embodiment 1 of the invention is a separator which is to be produced by performing press molding on a preform 14 that is formed into a plate-like shape, with a molding die, wherein the preform is configured into a sandwich structure where the second sheet in which a thermosetting resin is applied to graphite is interposed between the pair of first sheets obtained by the papermaking process using a raw material in which a fibrous filler is added to expanded graphite. When the thickness is 0.15 mm, therefore, the performance target values that the contact resistance is 30 M□•cm² or less, the bending strength is 25 MPa or more, the bending strain is 0.6 to 2.1%, and the gas permeability coefficient is 1 □ 10⁻⁸ mol•m/m²•s•MPa or less can be satisfied. As a result, in order to attain excellent electrical conductivity and molding processability, the fuel cell separator to be produced by performing press molding on a preform in which expanded graphite is used as the main raw material is improved so that the preform has the sandwich structure where the second sheet made of resin carbon is sandwiched between the two first sheets produced by a papermaking process, and therefore it is possible to provide a fuel cell separator in which the characteristics of the mechanical strength, the flexibility, and the gas impermeability are improved, and a light and compact configuration that is preferred in the automobile use or the like can be realized.

The separator has the sandwich structure where the second sheet 14B which is excellent in moldability is interposed between the pair of first sheets 14A which are excellent in mechanical strength and electrical characteristics. In addition that the above-mentioned characteristics are satisfied, therefore, the moldability is improved while the sealing property (gas permeability coefficient) is further improved, with the result that a fuel cell separator having excellent total performance, and a method of producing the fuel cell separator can be realized.

## Claims

1. A fuel cell separator which is to be produced by performing press molding on a preform that is formed into a plate-like shape, with a molding die, wherein
said preform is configured into a sandwich structure where a second sheet in which a thermosetting resin is applied to graphite is interposed between a pair of first sheets obtained by a papermaking process using a raw material in which a fibrous filler is added to expanded graphite.

2. A fuel cell separator according to claim 1, wherein said first sheets have a thermosetting resin which is impregnated after the papermaking process.

3. A fuel cell separator according to claim 2, wherein said thermosetting resin used in said first sheets is a phenol resin.

4. A fuel cell separator according to claim 3, wherein a degree of impregnation of said phenol resin is set to a range of 5 to 30%.

5. A fuel cell separator according to any one of claims 2 to 4, wherein a material ratio of said expanded graphite used in said first sheets is set to 60 to 90%.

6. A fuel cell separator according to claim 3 or 4, wherein said phenol resin contains graphite.

7. A fuel cell separator according to claim 3 or 4, wherein said separator has graphite which is applied after impregnation of said phenol resin.

8. A fuel cell separator according to any one of claims 1 to 4, wherein said fibrous filler has carbon fibers or acrylic fibers.

9. A fuel cell separator according to any one of claims 1 to 4, wherein said thermosetting resin used in said second sheet is a phenol resin.

10. A method of producing a fuel cell separator, having a secondary molding step of performing press molding on a preform that is formed into a plate-like shape, with using a molding die, wherein
said preform is produced by a primary step having: a papermaking step of performing a papermaking process using a raw material in which a fibrous filler is added to expanded graphite; and a stacking step of stacking a pair of first sheets obtained in said papermaking step while interposing a second sheet in which a thermosetting resin is applied to graphite, between said pair.

11. A method of producing a fuel cell separator according to claim 10, wherein said primary step has a post-impregnating step of impregnating a sheet-like member which is paper-made in said papermaking step, with a phenol resin, thereby producing said first sheets.

12. A method of producing a fuel cell separator according to claim 10 or 11, wherein a phenol resin is used as said thermosetting resin for producing said second sheet.
